# FASCICULE DE BREVET EUROPEEN

(11) **EP 3 977 354 B1**
(45) Date de publication et mention de la délivrance du brevet: **12.02.2025**
(21) Numéro de dépôt: 20728076.9
(22) Date de dépôt: 29.05.2020
(51) Int. Cl.: G06K 19/077

(54) **DISPOSITIF D'IDENTIFICATION, ÉLÉMENT TUBULAIRE ET PROCÉDÉ CORRESPONDANTS**
IDENTIFIZIERUNGSVORRICHTUNG, ENTSPRECHENDES RÖHRENFÖRMIGES ELEMENT UND VERFAHREN
IDENTIFICATION DEVICE, CORRESPONDING TUBULAR ELEMENT AND METHOD

(30) Priorité: 29.05.2019 FR 1905779
(43) Date de publication de la demande: 06.04.2022
(73) Titulaire: Saint-Gobain Pam Canalisation, 54700 Pont-à-Mousson (FR)
(72) Inventeur: FERNANDES, José, 71370 SAINT-GERMAIN DU PLAIN (FR)
(74) Mandataire: Lavoix
(86) Numéro de dépôt international: PCT/EP2020/065002
(87) Numéro de publication internationale: WO 2020/239988

(56) Documents cités:
- CN-A- 108 331 977
- FR-A1- 2 314 802
- KR-A- 20170 015 652
- US-A1- 2008 165 011
- US-A1- 2009 159 693
- AULTIMUS ET AL: "Remote Identification of Metal Castings", TRANSACTIONS OF THE AMERICAN FOUNDRYMEN'S SOCIETY, AMERICAN FOUNDRYMEN'S SOCIETY, US, vol. 98-044, 1 January 1998 (1998-01-01), pages 605 - 608, XP009092614, ISSN: 0065-8375

## Description

La présente invention concerne un dispositif d'identification, du type comportant une puce électronique, un élément de communication adapté pour relier la puce électronique à un dispositif de lecture, et une enveloppe entourant la puce électronique et l'élément de communication, l'enveloppe comprenant un réceptacle qui est en un matériau métallique ayant un point de fusion supérieur à 150°C, l'enveloppe comprenant un garnissage entourant la puce électronique et l'élément de communication, le garnissage résistant à une température supérieure à 150°C et le garnissage étant disposé dans le réceptacle.

Un élément tubulaire est connu du document WO 2012/152657, qui décrit un raccord pour la jonction de tubes dans le domaine du forage pétrolier et dans lequel le raccord est muni d'un évidement longitudinal ménagé dans une extrémité frontale du raccord. L'évidement est destiné à recevoir une puce d'identification du raccord et/ou des tubes raccordés.

Il est également connu d'utiliser des puces RFID en liaison avec des canalisations, et plus particulièrement avec des éléments de canalisation destinés au transport de l'eau, comme par exemple décrit dans les documents EP 408 320, EP 875 006, DE 10 2004 053731 et EP 2 453 264.

Il est également connu, par exemple du document WO 2006/041306, d'équiper des trains de forage avec des puces insérées dans un logement ménagé dans une section femelle d'un tube.

Le document ALTIMUS ET AL: "Remote Identification of Metal Castings", TRANSACTIONS OF THE AMERICAN FOUNDRYMEN'S SOCIETY, AMERICAN FOUNDRYMEN'S SOCIETY, US, vol. 98-044, 1 janvier 1998 (1998-01-01), pages 605-608, XP009092614, ISSN: 0065-8375 décrit un dispositif d'identification RFID adapté pour être intégré dans des objets coulés en aluminium.

KR 2017 0015652 A décrit un récipient pour la coulée d'acier.

US 2009/159693 A1 décrit un dispositif d'identification muni d'un élément RFID et d'un bouchon inséré dans un porte-bouchon.

Il existe également des éléments tubulaires qui comprennent un corps de base en fonte qui est couvert d'un revêtement comprenant un matériau fusible, tel qu'une matière synthétique. La matière synthétique est appliquée à l'état solide par exemple par projection de particules solides sur le corps de base préchauffé, fond lors du contact avec le corps de base préchauffé, et se solidifie ensuite lors du refroidissement.

L'invention a pour but de proposer un dispositif d'identification qui permette une lecture fiable de données d'identification d'un élément tubulaire, indépendamment des conditions thermiques lors de la fabrication de l'élément tubulaire, tout en étant économique à fabriquer.

A cet effet, l'invention a pour objet un dispositif d'identification, tel que décrit ci-dessus, caractérisé en ce que le garnissage est en un matériau réfractaire coulé à l'état non solide dans le réceptacle et solidifié.

Selon des modes de réalisation particuliers du dispositif d'identification, celui-ci peut comporter l'une ou plusieurs des caractéristiques suivantes :
- le réceptacle est en un matériau métallique moins noble que de la fonte ou moins noble que le fer ;
- le réceptacle est en aluminium, en zinc ou en magnésium ou
- le réceptacle est en un alliage contenant de l'aluminium, du zinc et/ou du magnésium, notamment en un alliage zinc-aluminium, tel que du ZnAl à 85% de zinc et 15% d'aluminium en proportions massiques ;
- le réceptacle comprend un fond, et de préférence une paroi , notamment faisant le tour d'un bord du fond, de préférence le réceptacle étant une coupelle emboutie ;
- le dispositif d'identification comprend un boîtier enrobant la puce électronique et l'élément de communication, notamment un boîtier en céramique ;
- le garnissage entoure le boîtier ;
   - - le garnissage est en ciment réfractaire ; et
   - - le boîtier est en contact avec le réceptacle, notamment avec le fond du réceptacle et le garnissage entoure le boîtier ;
- le réceptacle est en un matériau métallique ayant un point de fusion supérieur à 200°C ;
- le réceptacle est en un matériau métallique ayant un point de fusion supérieur à 250°C ;
- le garnissage résiste à une température supérieure à 200°C ; et
- le garnissage résiste à une température supérieure à 250°C .

L'invention a également pour objet un élément tubulaire, du type muni d'un corps de base, le corps de base étant en métal, notamment en fonte, et ayant une surface extérieure, le corps de base comprenant un évidement ménagé dans sa surface, caractérisé en ce que l'élément tubulaire comprend un dispositif d'identification tel que défini ci-dessus, et le dispositif d'identification est disposé dans l'évidement.

L'invention a également pour objet un procédé de fabrication d'un élément tubulaire tel que défini ci-dessus, comprenant les étapes suivantes :
- fourniture d'un élément tubulaire tel que défini ci-dessus,
- chauffage de l'élément tubulaire à une température supérieure à 150°C, en obtenant un élément tubulaire chauffé,
- application d'un matériau fusible sur le corps de base de l'élément tubulaire chauffé, et
- solidification du matériau fusible sur le corps de base.

Selon un mode de réalisation particulier du procédé de fabrication selon l'invention, l'étape de chauffage de l'élément tubulaire est une étape de chauffage de l'élément tubulaire à une température supérieure à 200°C.

L'invention sera mieux comprise à la lecture de la description qui va suivre, donnée uniquement à titre d'exemple et faite en se référant aux dessins annexés, sur lesquels :
[Fig 1] - la figure 1 est une vue schématique d'un ensemble d'une installation d'identification d'un élément tubulaire et d'un élément tubulaire selon l'invention;
[Fig 2] - la figure 2 est une vue partiellement arrachée d'une partie d'une jonction tubulaire comprenant un élément tubulaire selon l'invention ;
[Fig 3] - la figure 3 est une vue agrandie du détail III de la figure 2 ; et
[Fig 4] - la figure 4 est une vue en coupe d'un dispositif d'identification de l'élément tubulaire des figures 1 à 3.

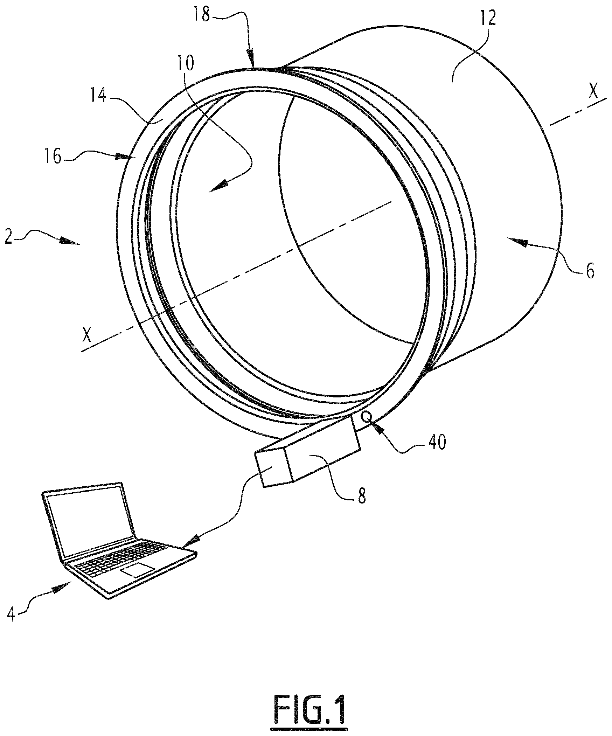

Sur la figure 1 est représenté un ensemble 2 d'une installation d'identification 4 d'un élément tubulaire et d'un élément tubulaire 6 selon l'invention.

L'installation d'identification 4 comprend un dispositif de lecture 8 sans contact physique.

L'élément tubulaire 6 comprend un corps de base 10 muni d'une partie courante 12 et d'un bout à emboîtement 14. Le corps de base 10 est par exemple en métal, notamment en fonte, et en particulier en fonte à graphite sphéroïdal. Le corps de base 10 s'étend selon un axe central X-X. Dans ce qui suit, les expressions « axialement », « radialement » et « circonférentiellement » seront utilisées par référence à l'axe central X-X. Alternativement, le corps de base 10 comprend un revêtement d'un alliage métallique à base de zinc.

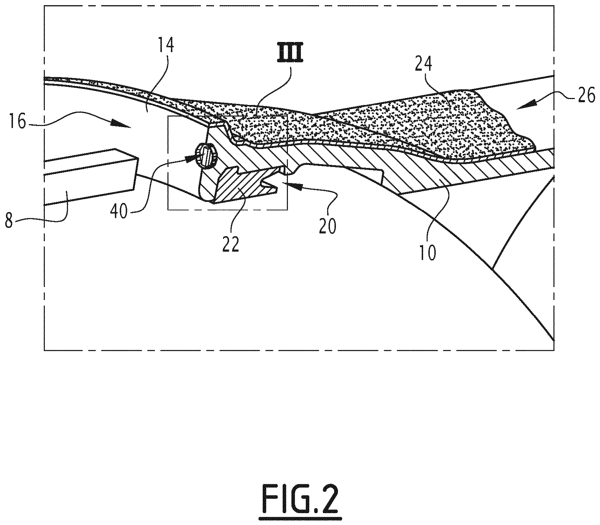

La partie courante 12 est de forme cylindrique creuse d'axe X-X, notamment à section circulaire, et forme un bout uni (non-représenté). Le bout à emboîtement 14 délimite une face frontale 16 annulaire. La face frontale 16 s'étend perpendiculairement par rapport à l'axe central X-X. La face frontale 16 est délimitée par un bord radialement extérieur 18. Le bout à emboîtement 14 comprend une gorge annulaire intérieure 20 adaptée à loger un joint d'étanchéité 22 (voir figure 2).

L'élément tubulaire 6 comprend également une couche de revêtement 24 en un matériau fusible, par exemple en matière thermoplastique ou thermodurcissable. Dans le cas où le corps de base 10 est revêtu de l'alliage métallique à base de zinc, la couche de revêtement 24 est une couche poreuse formant bouche-pores du revêtement de l'alliage à base de zinc.

Le corps de base 10 comporte une surface 26 de corps de base.

Le corps de base 10, et en l'occurrence le bout à emboîtement 14, est muni d'un évidement 28 débouchant sur la surface de corps de base 26, et en l'occurrence dans la face frontale 16. L'évidement 28 définit un axe central d'évidement A-A qui est en l'occurrence parallèle à l'axe central X-X. L'évidement 28 a par exemple une forme cylindrique, notamment à section circulaire. L'évidement 28 est un évidement borgne et a une surface de fond 30 et une surface latérale 32 fermée sur son pourtour, en l'occurrence une surface latérale cylindrique à section circulaire. L'évidement 28 a une profondeur axiale PA et une largeur transversale LT, qui est en l'occurrence le diamètre de l'évidement 22. La profondeur axiale PA est mesurée selon l'axe central A-A et la largeur transversale LT est mesurée dans un plan perpendiculairement à l'axe central A-A. D'une manière générale, la largeur transversale LT est la plus grande étendue de l'évidement 28 dans un plan transversal perpendiculairement à l'axe central A-A. En variante, l'évidement 22 a une autre forme qu'une forme cylindrique, par exemple une forme parallélépipédique. L'évidement 28 peut être muni de rainures axiales, comme représentées sur les Figures, ou être strictement à section circulaire ou rectangulaire selon l'axe A-A. En variante encore, l'évidement 28 peut déboucher sur la surface de corps de base 26 ailleurs que dans la face frontale 16, par exemple dans la surface radialement extérieure du bout à emboîtement 14.

L'élément tubulaire 6 est muni d'un dispositif d'identification 40 sans contact.

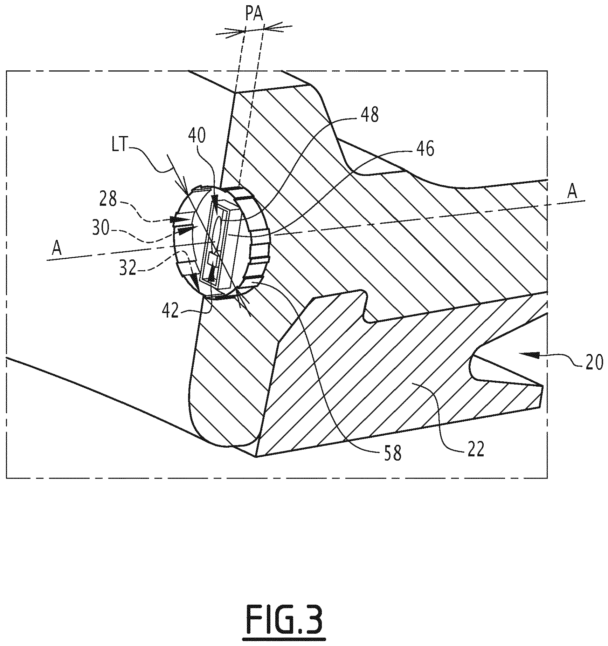

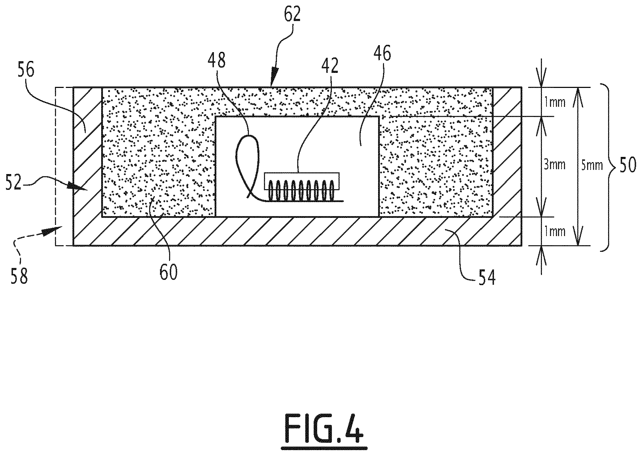

Le dispositif d'identification 40 est disposé dans l'évidement 28 ménagé dans le corps de base 10. Le dispositif d'identification 40 sera décrit plus particulièrement en référence aux figures 3 et 4.

Sur la Figure 3, le dispositif d'identification 40 est montré en perspective et sur la Figure 4 en coupe transversale selon son axe central, qui est à l'état monté un axe coïncidant avec l'axe A-A.

Le dispositif d'identification 40 comprend une puce électronique 42 contenant un support d'informations électronique et qui est reliée à un élément de communication 48 adapté pour relier le support d'informations à un dispositif de lecture 8 sans contact physique (« lecteur RFID »). De préférence, la puce électronique 42 et l'élément de communication 48 sont noyés dans un boîtier 46, notamment un boîtier en céramique.

Le support d'informations électronique est par exemple un circuit électronique à processeur et mémoire associés.

L'élément de communication 48 est par exemple une antenne, notamment une bobine, reliée au support d'informations électronique.

Le dispositif d'identification 40 comprend une enveloppe 50 entourant la puce électronique 42 ainsi que l'élément de communication 48, et dans le cas présent également le boîtier 46.

L'enveloppe 50 comprend un réceptacle 52 qui est en un matériau métallique ayant un point de fusion supérieur à 150°C, notamment supérieur à 200°C et de préférence supérieur à 250°C.

Le réceptacle 52 est en un matériau métallique moins noble que de la fonte ou moins noble que le fer. De manière générale, le réceptacle 52 est en un matériau moins noble que le corps de base. Ainsi, le réceptacle 52 protège le corps de base contre la corrosion.

Le réceptacle est par exemple en aluminium, en zinc ou en magnésium. Alternativement, le réceptacle 52 est en un alliage contenant de l'aluminium, du zinc et/ou du magnésium, notamment en un alliage zinc-aluminium tel que du ZnAl à 85% de zinc et 15% d'aluminium en proportions massiques.

Le réceptacle 52 comprend un fond 54 et une paroi 56. En l'occurrence le fond 54 est une plaque de forme circulaire. La paroi 56 fait le tour du bord du fond 54 et a donc en l'occurrence une forme cylindrique à section circulaire.

De préférence, le réceptacle 52 est une coupelle emboutie.

Optionnellement, le réceptacle 52 est muni d'excroissances de liaison 58, tel que des nervures qui s'appliquent contre l'évidement 28 (voir Figure 3).

Le fond 54 est de préférence adapté pour amplifier les performances de communication de l'élément de communication 48, en favorisant notamment la réflexion des ondes électromagnétiques émises.

L'enveloppe 50 est munie d'un garnissage 60 entourant ou recouvrant la puce électronique 42 ainsi que l'élément de communication 48, et plus particulièrement le boîtier 46. Le garnissage 60 est disposé dans le réceptacle 52.

Le garnissage 60 est en un matériau adapté pour résister à une température supérieure à 150°C, notamment supérieure à 200°C et de préférence supérieure à 250°C. Le terme « résister » signifie notamment que le matériau en question ne se déforme pas et ne subit pas de changement d'état physique. Le garnissage reste donc en place dans le réceptacle 52, garantissant de ce fait le maintien en place du boîtier 46 contenant la puce électronique et l'élément de communication. Le réceptacle 52 notamment en aluminium reste également en place étant donné qu'il est notamment serti dans l'évidement 28 et ne se déforme pas tant que la température reste inférieure à la température de fusion du matériau métallique dont il est constitué.

Avantageusement, le garnissage 60 est en un matériau adapté pour résister à une température supérieure ou égale à la température de fusion du matériau métallique constituant le réceptacle 52.

Le garnissage 60 est en un matériau réfractaire, notamment contenant ou étant constitué de ciment réfractaire. Le matériau réfractaire est avantageusement coulé à un état non solide dans le réceptacle et solidifié. Le garnissage 60 comporte une surface libre 62 qui s'étend parallèlement au bord libre formé par la paroi 56 du réceptacle, et notamment qui affleure ce bord.

Comme ceci est visible sur la Figure 4, le boîtier 46 qui enrobe la puce électronique 42 et l'élément de communication 48 est en contact avec le réceptacle 52, plus précisément avec le fond du réceptacle, le garnissage 60 entourant le boîtier 46.

De plus, dans le cas notamment où le corps de base est chauffé en vue de lui appliquer une couche de revêtement en matériau fusible, telle que la couche de revêtement 24, le boîtier 46 renfermant la puce électronique 42 et l'élément de communication 48 reste parfaitement en place dans le réceptacle 52. En effet, étant donné que le matériau réfractaire du garnissage 60 résiste à des températures élevées, notamment aux températures auxquelles le corps de base doit être chauffé pour appliquer le matériau fusible, le matériau réfractaire ne subit aucune déformation ou détérioration susceptible d'engendrer la délocalisation voire la perte du boîtier 46 et donc de nuire au bon fonctionnement du dispositif d'identification.

Le procédé de fabrication du dispositif d'identification 40 comprend les étapes suivantes :
- On fournit le réceptacle 52 ;
- On fournit la puce électronique 42 ainsi que l'élément de communication 48 et on les dépose dans le fond du réceptacle, le cas échéant la puce électronique et l'élément de communication sont intégrés dans le boîtier 46 qui est disposé dans le réceptacle 52 de telle sorte qu'il soit en contact avec le fond du réceptacle ;
- On fait couler le matériau du garnissage 60 à l'état liquide ou pâteux dans le réceptacle 52 jusqu'à ce que le matériau du garnissage recouvre complètement la puce électronique 42 ainsi que l'élément de communication 48, et le cas échéant le boîtier 46 ;
- On laisse le matériau du garnissage 60 se solidifier en obtenant le garnissage 60 à l'état solide.

Ainsi, on obtient le dispositif d'identification 40.

Ensuite, on introduit le dispositif d'identification 40 dans l'évidement 28.

Le dispositif d'identification 40 coopère avec l'évidement 28 par exemple par friction ou par complémentarité de formes.

Un procédé possible de fabrication d'un élément tubulaire 6 ou d'un tuyau selon l'invention comprend les étapes suivantes :
- on fournit un élément tubulaire 6 qui a un corps de base 10 et qui est démuni de la couche de revêtement 24, le dispositif d'indentification 40 étant disposé dans l'évidement 28 ;
- on fait chauffer le corps de base 10 à une température supérieure à 150°C, notamment supérieure à 200°C et de préférence supérieure à 250°C, en obtenant un corps de base 10 chauffé,
- on applique un matériau fusible sur le corps de base 10 chauffé, notamment par projection d'une poudre,
- on laisse le matériau fusible se solidifier sur le corps de base 10 en obtenant la couche de revêtement 24.

La température et la durée de l'échauffement sont telles que la puce électronique 42 ait pendant toute la durée du procédé une température inférieure à sa température de dégradation.

Le dispositif d'identification 40 protège la puce électronique de dégradations thermiques, notamment lors d'un procédé de revêtement par projection à chaud. De plus, le matériau réfractaire du garnissage 60 résistant à des températures élevées, il n'est pas affecté lors de l'application d'un revêtement par projection à chaud, garantissant ainsi le maintien en place de la puce électronique 42 et de l'élément de communication 48, et par voie de conséquence le bon fonctionnement du dispositif d'identification.

Par ailleurs, le réceptacle en métal permet une liaison solide et fiable entre le dispositif d'identification 40 et le corps de base 10.

Le fond du réceptacle permet d'augmenter l'efficacité de l'antenne RFID, notamment en matière de réflexion des ondes électromagnétiques émises.

Par ailleurs, le dispositif d'indentification 40 est économique, notamment du fait de ses composants en des matériaux traditionnels.

## Revendications

1. - Dispositif d'identification (40), du type comportant
- une puce électronique (42) ;
- un élément de communication (48) adapté pour relier la puce électronique à un dispositif de lecture (8) ;
- une enveloppe (50) entourant la puce électronique et l'élément de communication,
l'enveloppe comprenant un réceptacle (52) qui est en un matériau métallique ayant un point de fusion supérieur à 150°C,
l'enveloppe (50) comprenant un garnissage (60) entourant la puce électronique (42) et l'élément de communication (48),
le garnissage résistant à une température supérieure à 150°C et le garnissage étant disposé dans le réceptacle, **caractérisé en ce que**
le garnissage (60) est en un matériau réfractaire coulé à l'état non solide dans le réceptacle et solidifié.

2. - Dispositif d'identification selon la revendication 1, dans lequel
le réceptacle est en un matériau métallique moins noble que de la fonte ou moins noble que le fer.

3. - Dispositif d'identification selon la revendication 2, dans lequel
le réceptacle (52) est en aluminium, en zinc ou en magnésium ou dans lequel
le réceptacle est en un alliage contenant de l'aluminium, du zinc et/ou du magnésium, notamment en un alliage zinc-aluminium, tel que du ZnAl à 85% de zinc et 15% d'aluminium en proportions massiques.

4. Dispositif d'identification selon l'une quelconque des revendications précédentes, dans lequel le réceptacle (52) comprend un fond (54), et de préférence une paroi (56), notamment faisant le tour d'un bord du fond, de préférence le réceptacle étant une coupelle emboutie.

5. Dispositif d'identification selon l'une quelconque des revendications précédentes, dans lequel le dispositif d'identification comprend un boîtier (46) enrobant la puce électronique et l'élément de communication, notamment un boîtier en céramique.

6. Dispositif d'identification selon la revendication 5, dans lequel le garnissage (60) entoure le boîtier (46).

7. - Dispositif d'identification selon l'une quelconque des revendications précédentes, dans lequel le garnissage (60) est en ciment réfractaire.

8. Dispositif d'identification selon au moins les revendications 4 et 5 prises ensemble, dans lequel le boîtier (46) est en contact avec le réceptacle, notamment avec le fond (54) du réceptacle et le garnissage entoure le boîtier.

9. - Dispositif d'identification selon l'une quelconque des revendications précédentes, dans lequel le réceptacle (52) est en un matériau métallique ayant un point de fusion supérieur à 200°C.

10. Dispositif d'identification selon la revendication 9, dans lequel le réceptacle (52) est en un matériau métallique ayant un point de fusion supérieur à 250°C.

11. Dispositif d'identification selon l'une quelconque des revendications précédentes, dans lequel le garnissage résiste à une température supérieure à 200°C.

12. Dispositif d'identification selon la revendication 11, dans lequel le garnissage résiste à une température supérieure à 250°C.

13. Elément tubulaire, du type muni d'un corps de base (10),
le corps de base étant en métal, notamment en fonte, et ayant une surface extérieure (26),
le corps de base comprenant un évidement (28) ménagé dans sa surface,
**caractérisé en ce que** l'élément tubulaire comprend un dispositif d'identification (40) selon l'une quelconque des revendications précédentes, et **en ce que** le dispositif d'identification est disposé dans l'évidement.

14. Procédé de fabrication d'un élément tubulaire comprenant les étapes successives suivantes :
- fourniture d'un élément tubulaire (6) selon la revendication 13,
- chauffage de l'élément tubulaire à une température supérieure à 150°C, en obtenant un élément tubulaire chauffé,
- application d'un matériau fusible sur le corps de base de l'élément tubulaire chauffé, et
- solidification du matériau fusible sur le corps de base.

15. Procédé de fabrication d'un élément tubulaire selon la revendication 14, dans lequel l'étape de chauffage de l'élément tubulaire est une étape de chauffage de l'élément tubulaire à une température supérieure à 200°C.

## Patentansprüche

1. Identifizierungsvorrichtung (40) eines Typs, umfassend
- einen Mikrochip (42);
- ein Kommunikationselement (48), das angepasst ist, um den Mikrochip mit einer Lesevorrichtung (8) zu verbinden;
- eine Hülle (50), die den Mikrochip und das Kommunikationselement umgibt,
die Hülle umfassend eine Aufnahme (52), die aus einem metallischen Material ist, das einen Schmelzpunkt von mehr als 150 °C aufweist,
die Hülle (50) umfassend eine Auskleidung (60), die den Mikrochip (42) und das Kommunikationselement (48) umgibt,
wobei die Auskleidung einer Temperatur von mehr als 150 °C widersteht und die Auskleidung in der Aufnahme angeordnet ist, **dadurch gekennzeichnet, dass**
die Auskleidung (60) aus einem feuerfesten Material ist, das in nicht festem Zustand in die Aufnahme gegossen und verfestigt wird.

2. Identifizierungsvorrichtung nach Anspruch 1, wobei
die Aufnahme aus einem metallischen Material ist, das weniger edel als Gusseisen oder weniger edel als Eisen ist.

3. Identifizierungsvorrichtung nach Anspruch 2, wobei
die Aufnahme (52) aus Aluminium, Zink oder Magnesium ist, oder wobei
die Aufnahme aus einer aluminium-, zink- und/oder magnesiumhaltigen Legierung ist, insbesondere aus einer Zink-Aluminium-Legierung, wie beispielsweise ZnAl mit 85 % Zink und 15 % Aluminium in Massenanteilen.

4. Identifizierungsvorrichtung nach einem der vorherigen Ansprüche, wobei die Aufnahme (52) einen Boden (54) und vorzugsweise eine Wand (56), die insbesondere um einen Rand des Bodens herum verläuft, umfasst, wobei die Aufnahme vorzugsweise ein tiefgezogener Becher ist.

5. Identifizierungsvorrichtung nach einem der vorherigen Ansprüche, wobei die Identifizierungsvorrichtung ein Gehäuse (46) umfasst, das den Mikrochip und das Kommunikationselement umhüllt, insbesondere ein Keramikgehäuse.

6. Identifizierungsvorrichtung nach Anspruch 5, wobei die Auskleidung (60) das Gehäuse (46) umgibt.

7. Identifizierungsvorrichtung nach einem der vorherigen Ansprüche, wobei die Auskleidung (60) aus feuerfestem Zement ist.

8. Identifizierungsvorrichtung nach mindestens den Ansprüchen 4 und 5 zusammengenommen, wobei das Gehäuse (46) mit der Aufnahme in Kontakt ist, insbesondere mit dem Boden (54) der Aufnahme, und die Auskleidung das Gehäuse umgibt.

9. Identifizierungsvorrichtung nach einem der vorherigen Ansprüche, wobei die Aufnahme (52) aus einem metallischen Material ist, das einen Schmelzpunkt von mehr als 200 °C aufweist.

10. Identifizierungsvorrichtung nach Anspruch 9, wobei die Aufnahme (52) aus einem metallischen Material ist, das einen Schmelzpunkt von mehr als 250 °C aufweist.

11. Identifizierungsvorrichtung nach einem der vorherigen Ansprüche, wobei die Auskleidung einer Temperatur von mehr als 200 °C widersteht.

12. Identifizierungsvorrichtung nach Anspruch 11, wobei die Auskleidung einer Temperatur von mehr als 250 °C widersteht.

13. Rohrförmiges Element des Typs, der mit einem Grundkörper (10) versehen ist,
wobei der Grundkörper aus Metall, insbesondere Gusseisen, ist und eine Außenfläche (26) aufweist,
der Grundkörper umfassend eine Aussparung (28), die in seiner Oberfläche ausgebildet ist,
**dadurch gekennzeichnet, dass** das rohrförmige Element eine Identifizierungsvorrichtung (40) nach einem der vorherigen Ansprüche umfasst, und dass die Identifizierungsvorrichtung in der Aussparung angeordnet ist.

14. Herstellungsverfahren eines rohrförmigen Elements, umfassend die folgenden aufeinanderfolgenden Schritte:
- Bereitstellen eines rohrförmigen Elements (6) nach Anspruch 13,
- Erhitzen des rohrförmigen Elements auf eine Temperatur von mehr als 150 °C, wobei ein erhitztes rohrförmiges Element erlangt wird,
- Aufbringen eines schmelzbaren Materials auf den Grundkörper des erhitzten rohrförmigen Elements und
- Verfestigen des schmelzbaren Materials auf dem Grundkörper.

15. Verfahren zur Herstellung eines rohrförmigen Elements nach Anspruch 14, wobei der Schritt eines Erhitzens des rohrförmigen Elements ein Schritt eines Erhitzens des rohrförmigen Elements auf eine Temperatur von mehr als 200 °C ist.

## Claims

1. An identification device (40), of the type comprising
- an electronic chip (42);
- a communication element (48) suitable for connecting the electronic chip to a reading device (8);
- a casing (50) surrounding the electronic chip and the communication element,
the casing comprising a receptacle (52) made of a metal material having a melting point higher than 150° C,
the casing (50) comprising a lining (60) surrounding the electronic chip (42) and the communication element (48),
the lining being resistant to a temperature higher than 150° C,
the lining being arranged in the receptacle, **characterized in that**
the lining (60) is made of a refractory material cast in the non-solid state in the receptacle and solidified.

2. The identification device according to claim 1, wherein
the receptacle is made of a metal material less noble than cast iron or less noble than iron.

3. The identification device of claim 2, wherein
the receptacle (52) is made of aluminum, zinc or magnesium or wherein
the receptacle is made of an alloy containing aluminum, zinc and/or magnesium, in particular a zinc/aluminum alloy, such as ZnAl with 85% zinc and 15% aluminum by mass.

4. The identification device according to any one of the preceding claims, wherein the receptacle (52) comprises a bottom (54), and preferably a wall (56), in particular going around an edge of the bottom, the receptacle preferably being a deep-drawn cup.

5. The identification device according to any one of the preceding claims, wherein the identification device comprises a housing (46) encasing the electronic chip and the communication element, in particular a ceramic housing.

6. The identification device according to claim 5, wherein the lining (60) surrounds the housing (46).

7. The identification device according to any one of the preceding claims, wherein the lining (60) is made of refractory cement.

8. The identification device according to at least claims 4 and 5 taken together, wherein the housing (46) is in contact with the receptacle, in particular with the bottom (54) of the receptacle and the lining surrounds the housing.

9. The identification device according to any one of the preceding claims, wherein the receptacle (52) is made of a metal material having a melting point higher than 200° C.

10. The identification device according to claim 9, wherein the receptacle (52) is made of a metal material having a melting point higher than 250° C.

11. The identification device according to any one of the preceding claims, wherein the lining is resistant to a temperature higher than 200° C.

12. The identification device according to claim 11, wherein the lining is resistant to a temperature higher than 250° C.

13. A tubular element, of the type provided with a base body (10),
the base body being made of metal, in particular cast iron, and having an outer surface (26),
the base body comprising a recess (28) in its surface,
**characterized in that** the tubular element comprises an identification device (40) according to any of the preceding claims, and **in that** the identification device is arranged in the recess.

14. A method for manufacturing a tubular element comprising the following successive steps:
- providing a tubular element (6) according to claim 13,
- heating the tubular element to a temperature higher than 150° C, obtaining a heated tubular element,
- applying a fusible material to the base body of the heated tubular element, and
- solidifying the fusible material on the base body.

15. A method for manufacturing a tubular element according to claim 14, wherein the step of heating the tubular element is a step of heating the tubular to a temperature higher than 200° C.
